# FASCICULE DE BREVET EUROPEEN

(11) **EP 2 535 610 B1**
(45) Date de publication et mention de la délivrance du brevet: **08.03.2017**
(21) Numéro de dépôt: 12167944.3
(22) Date de dépôt: 14.05.2012
(51) Int. Cl.: F16C 33/46, F16C 33/48, F16C 33/54, F16C 23/08

(54) **Cage pour roulement à rouleaux sphériques**
Käfig für Pendelrollenlager
Cage for spherical roller bearings

(30) Priorité: 14.06.2011 FR 1101815
(43) Date de publication de la demande: 19.12.2012
(73) Titulaire: NTN-SNR Roulements, 74000 Annecy (FR)
(72) Inventeur: Pollier, Vivien, 74570 Pringy (FR)
(74) Mandataire: Alatis

(56) Documents cités:
- EP-A1- 1 884 669
- WO-A1-2007/065402
- FR-A1- 2 228 174
- FR-A1- 2 528 509
- JP-A- 2002 372 040
- JP-U- 61 017 523
- US-A- 2 969 267
- US-B1- 6 425 182

## Description

### DOMAINE TECHNIQUE DE L'INVENTION

L'invention se rapporte à un roulement sphérique à rouleaux pourvu d'au moins une cage. Elle a trait notamment à une cage pour un tel roulement sphérique. Dans le cadre de la présente demande, un roulement sphérique désignera un roulement dont la bague extérieure forme un chemin de roulement sphérique qui constitue une rotule dans laquelle un sous-ensemble constitué par les rouleaux, la ou les cages et la bague intérieure peut osciller. Ce type de roulement est utilisé notamment dans des applications où l'alignement des organes fixés à la bague intérieure et à la bague extérieure est difficile à obtenir ou non constant.

### ETAT DE LA TECHNIQUE ANTERIEURE

Dans le document FR 06 06998 (publié sous le numéro FR 2 904 388) est décrit un roulement sphérique pourvu d'une cage en tôle monobloc pour au moins une rangée de rouleaux, la cage définissant un axe géométrique de révolution et comportant : un anneau de grand diamètre comportant une face transversale d'extrémité ; un anneau de petit diamètre comportant une face transversale d'extrémité ; et des ponts reliant l'anneau de petit diamètre et l'anneau de grand diamètre et définissant avec l'anneau de petit diamètre et l'anneau de grand diamètre des alvéoles de guidage des rouleaux, la cage comportant en outre une face radiale extérieure tournée radialement vers l'extérieur et s'étendant axialement de l'anneau de grand diamètre à l'anneau de petit diamètre, la face radiale extérieure étant enveloppée par une surface de révolution constituée d'une partie d'extrémité cylindrique s'étendant à partir de l'anneau de grand diamètre vers l'anneau de petit diamètre, d'une partie d'extrémité tronconique s'étendant à partir de l'anneau de petit diamètre vers l'anneau de grand diamètre et s'évasant vers l'anneau de grand diamètre suivant un premier angle solide et d'une partie intermédiaire tronconique reliant la partie de petit diamètre et la partie de grand diamètre, et s'évasant vers la partie de grand diamètre suivant un deuxième angle solide inférieur au premier angle solide. En d'autres termes, la face radiale extérieure est tout entière incluse dans une surface de révolution biconique. La partie intermédiaire tronconique permet une insertion plus aisée de la bague intérieure dans la bague extérieure, et contribue à la rigidification de la cage. Les ponts comportent des ergots latéraux de guidage des rouleaux, deux ergots latéraux de chaque pont étant avantageusement situés axialement de part et d'autre de la partie intermédiaire sur la partie d'extrémité tronconique et la partie d'extrémité cylindrique, et dirigés vers une même alvéole. Ces ergots permettent le guidage des rouleaux et empêchent leur évasion, d'une part lors du montage et d'autre part lors de l'utilisation du roulement, notamment lorsque la bague intérieure oscille par rapport à la bague extérieure. Le positionnement des ergots, l'un orienté par rapport à un tronc de cône et l'autre par rapport à un cylindre, nécessite lors de la fabrication de la cage un outillage complexe, dont le contrôle est difficile. De plus, on constate à l'usage des usures non uniformes des ergots, et une tendance pour les rouleaux à venir éroder d'autres surfaces des alvéoles, ce qui traduit une instabilité de positionnement des rouleaux dans les alvéoles.

Par ailleurs, dans le document US 6 425 182 A B1 est décrite une cage pour roulement sphérique avec des ponts de cage rectilignes comportant des ergots de guidage.

### EXPOSE DE L'INVENTION

L'invention vise à remédier à tout ou partie des inconvénients de l'état de la technique identifiés ci-dessus, et notamment à proposer une cage à la fois plus simple à fabriquer et plus performante en terme de guidage des rouleaux.

Pour ce faire est proposé selon un premier aspect de l'invention une cage selon la revendication 1.

Comme le comprendra l'homme du métier, l'axe caractéristique de l'alvéole tel que défini précédemment est destiné à être confondu avec l'axe géométrique d'un rouleau placé dans l'alvéole au contact des facettes de guidage et dont les surfaces de roulement sont confondues avec la surface de révolution. La fonction des alvéoles est ainsi en premier lieu de guider le rouleau qui roule sur les bagues intérieure et extérieure du roulement sphérique.

Dans la mesure où les ergots sont situés sur le tronçon intermédiaire dont la face intérieure est tronconique et parallèle à l'axe géométrique de l'alvéole, l'outillage de formage des ergots est simplifié et il devient plus facile de tenir les tolérances sévères de fabrication. Suivant la méthode de formage choisie, par matage ou roulage, l'arête sera vive ou très légèrement arrondie, avec dans ce cas un rayon de courbure très faible, inférieur à 1 millimètre.

Par construction, les arêtes sont situées sur la surface géométrique tronconique intermédiaire. Les facettes de guidage peuvent avoir une « largeur », mesurée sensiblement perpendiculairement à l'arête intérieure, relativement importante et constante, ce qui garantit un contact maîtrisé entre les facettes de guidage et le rouleau présent dans l'alvéole.

De préférence, les axes des alvéoles sont situés sur une même enveloppe géométrique tronconique primitive située radialement à l'intérieur de la surface géométrique tronconique intermédiaire ou confondue avec la surface géométrique tronconique intermédiaire. Les facettes de guidage des ergots ont ainsi une fonction additionnelle de rétention des rouleaux qui se trouvent, après montage de l'ensemble du roulement sphérique, prisonniers entre la bague intérieure du roulement sphérique et les ergots.

Alternativement, il est possible de prévoir que l'enveloppe géométrique tronconique primitive soit située radialement à l'extérieur de la surface géométrique tronconique intermédiaire. Dans une telle hypothèse, il est toutefois nécessaire de prévoir d'autres moyens de rétention des rouleaux. On pourra par exemple prévoir sur chaque face d'extrémité axiale de chaque rouleau un embrèvement, et sur chaque anneau des ergots faisant saillie dans chaque alvéole.

La surface de révolution a préférentiellement une génératrice en arc de cercle, ce qui traduit le fait que les rouleaux adaptés à la cage ont eux-mêmes un profil en arc de cercle, qui les rend particulièrement adaptés à un roulement sphérique.

Selon un mode de réalisation préféré, chaque facette de guidage présente une arête extérieure parallèle à l'arête intérieure, et située à une distance de l'arête intérieure supérieure au tiers et préférablement à la moitié de la longueur de l'arête intérieure. On parlera ici d'arêtes parallèles pour désigner des arêtes faisant l'une avec l'autre un angle inférieur à 5°. Suivant cette disposition, on garantit un point de contact ou une aire de contact maîtrisés entre rouleau et facette de guidage malgré les légères oscillations de l'axe du rouleau par rapport à l'axe de l'alvéole.

Les facettes sont de préférence planes ou concaves, avec dans cette dernière hypothèse un rayon de courbure supérieur à celui de la surface de roulement des rouleaux.

Selon un mode de réalisation préféré, chaque alvéole présente deux faces de guidage d'extrémité constituées par les deux anneaux d'extrémité, les deux faces de guidage d'extrémité étant planes, perpendiculaires à l'axe de l'alvéole et distantes l'une de l'autre d'une distance L. Ces faces sont destinées à guider les faces d'extrémité des rouleaux, qui pourront également être planes, ou le cas échéant présenter un embrèvement.

On peut prévoir certaines dispositions géométriques qui, seules ou en combinaison, contribueront à un meilleur guidage des rouleaux dans les alvéoles, et notamment à une moindre oscillation de l'axe de rotation des rouleaux dans les alvéoles, d'où une moindre usure. En particulier on peut prévoir qu'en considérant chaque alvéole et chaque pont délimitant l'alvéole considérée, les facettes de guidage périphérique situées sur le pont considéré soient distantes l'une de l'autre d'une distance supérieure au tiers de la distance L séparant les deux faces d'extrémité de l'alvéole considérée. On peut également prévoir que, en considérant chaque alvéole et chaque pont délimitant l'alvéole considérée, les deux facettes de guidage périphérique des deux ergots du pont considéré pour l'alvéole considérée soient distantes l'une de l'autre d'une distance supérieure à la moitié de la distance séparant les deux faces de guidage d'extrémité, ce qui traduit un écartement relativement important. On peut également prévoir qu'en considérant chaque alvéole et chaque pont délimitant l'alvéole considérée, chaque facette de guidage périphérique du pont considéré soit distante de l'une des deux faces de guidage d'extrémité de l'alvéole considérée d'une distance inférieure au quart, et préférentiellement au cinquième, de la distance L séparant les deux faces de guidage d'extrémité de l'alvéole considérée.

Suivant un mode de réalisation, chaque arête intérieure a une longueur comprise entre un dixième et un cinquième de la distance séparant les deux faces de guidage d'extrémité.

Suivant l'invention et de manière à faciliter le formage de la cage par emboutissage d'une tôle, les tronçons d'extrémité de chacun des ponts reliés à celui des deux anneaux ayant le plus petit diamètre présentent chacun une face intérieure tournée vers l'axe de révolution et tangente à une même surface tronconique d'extrémité décrite autour de l'axe de révolution.

Pour permettre un positionnement de la surface tronconique intermédiaire à l'extérieur des axes des alvéoles, l'invention prévoit que la surface tronconique de révolution d'extrémité présente un angle solide supérieur à l'angle solide de la surface tronconique de révolution intermédiaire. On peut également prévoir que les tronçons d'extrémité de chacun des ponts reliés à celui des deux anneaux de plus grand diamètre présentent chacun une face intérieure tournée vers l'axe de révolution et tangente à une même surface cylindrique d'extrémité décrite autour de l'axe de révolution.

Préférentiellement, la cage précédemment décrite est réalisée en tôle, de préférence en tôle emboutie.

Selon un autre aspect de l'invention, celle-ci a trait à un roulement sphérique comportant :
- une bague extérieure monobloc sur laquelle est formé un chemin de roulement sphérique ;
- une bague intérieure sur laquelle sont formés deux chemins de roulement ;
- deux cages telles que décrites précédemment, chacune correspondant à l'un des chemins de roulements de la bague intérieure ; et
- des rouleaux à génératrice en arc de cercle disposés dans les alvéoles de la cage, entre la bague intérieure et la bague extérieure et de manière à former deux rangées de rouleaux roulant sur les chemins de roulement.

Les anneaux de plus grand diamètre des deux cages sont alors contigus.

Préférentiellement, les arêtes intérieures de chaque cage sont situées radialement à l'extérieur d'un tronc de cône décrit par les axes de rotation des rouleaux lorsque les rouleaux roulent sur le chemin de roulement correspondant de la bague intérieure.

Pour un guidage optimal de la cage par rapport à la bague intérieure, l'anneau de plus petit diamètre de chaque cage comporte une face cylindrique tournée radialement vers l'intérieur en regard d'une surface correspondante de la bague intérieure tournée radialement vers l'extérieur.

### BREVE DESCRIPTION DES FIGURES

D'autres caractéristiques et avantages de l'invention ressortiront à la lecture de la description qui suit, en référence aux figures annexées, qui illustrent :
- la figure 1, une vue en perspective d'un roulement sphérique selon un mode de réalisation de l'invention ;
- la figure 2, une vue en coupe axiale du roulement de la figure 1
- la figure 3, une vue en perspective d'une cage du roulement de la figure 1
- la figure 4, une vue en coupe axiale de la cage de la figure 3 ;
- la figure 5, une vue en coupe de la cage de la figure 3 dans le plan d'une facette de contact.

Pour plus de clarté, les éléments identiques ou similaires sont repérés par des signes de référence identiques sur l'ensemble des figures.

### DESCRIPTION DETAILLEE D'UN MODE DE REALISATION

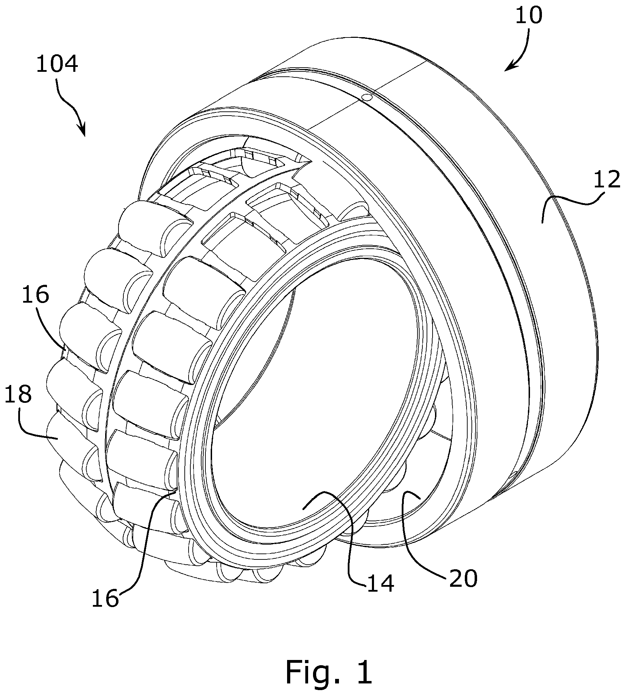

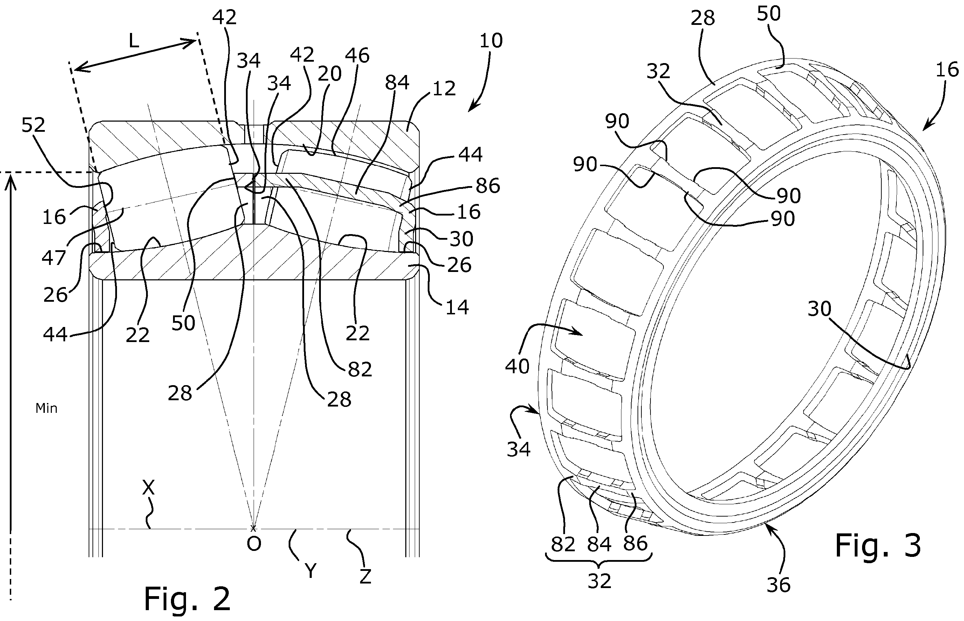

En référence aux figures **1** et **2****,** un roulement sphérique **10** est composé d'une bague extérieure **12,** d'une bague intérieure **14** de deux cages **16** et de rouleaux **18.**

La bague extérieure **12** est constituée d'une pièce monobloc en acier et comporte un chemin de roulement **20** unique sphérique, au sens où le chemin de roulement constitue une surface qui se trouve sur une sphère centrée en un point **O** qui constitue un centre de symétrie de la bague extérieure **12.** On peut également définir un axe de symétrie de révolution **X** de la bague extérieure **12.**

La bague intérieure **14** est également monobloc et comporte deux chemins de roulement **22** faisant face au chemin de roulement **20** de la bague extérieure. Chacun de ces deux chemins de roulement **22** constitue une surface de révolution autour d'un axe de symétrie de révolution **Y** et dont la génératrice dans le plan de la figure **1** est un arc de cercle ayant un rayon sensiblement égal ou légèrement supérieur au rayon de courbure du chemin de roulement **20** de la bague extérieure. Sur la figure **2****,** l'axe de symétrie de révolution **Y** de la bague intérieure a été représenté confondu avec l'axe de symétrie de révolution **X** de la bague extérieure **12,** mais en pratique, l'axe de symétrie **Y** peut pivoter avec la bague intérieure **14** autour du point **O.** La bague intérieure **14** comporte en outre, à chaque extrémité axiale, un rebord **26** tourné radialement vers la bague extérieure et prolongeant le chemin de roulement **22.**

Chaque rouleau **18** est conformé en tonneau, avec deux faces planes transversales d'extrémité **42, 44** et une surface de roulement convexe **46** engendrée par une génératrice constituée par un arc de cercle de rayon inférieur au rayon de courbure du chemin de roulement sphérique **22** en révolution autour d'un axe géométrique **47** qui constitue l'axe de rotation du rouleau **18.**

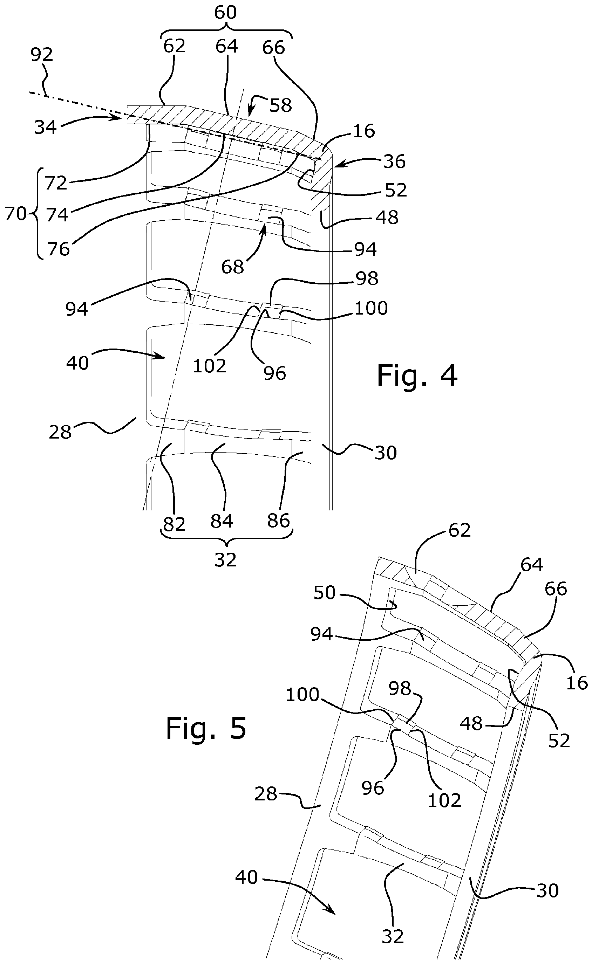

Les deux cages **16,** dont certains détails sont visibles sur les figures **3** à **5****,** sont identiques et fabriquées en tôle. Chaque cage définit un axe de révolution **Z** confondu avec l'axe de révolution **Y** de la bague intérieure, et comporte un anneau **28** de grand diamètre extérieur, un anneau **30** de plus petit diamètre extérieur, et des ponts **32** s'étendant d'un anneau à l'autre. L'anneau de grand diamètre **28** présente une face **34** (figure **4**) tournée axialement vers l'extérieur de la cage et l'anneau de petit diamètre **30** une face plane transversale **36** tournée vers l'extérieur de la cage, les deux faces transversales **34, 36** étant tangentes à deux plans transversaux encadrant la cage. Les ponts **32** sont obtenus par découpe de fenêtres **40** dans la tôle emboutie constituant la cage **16,** ces fenêtres **40** formant des alvéoles dans lesquelles sont logés les rouleaux **18.**

L'anneau de petit diamètre **30** comporte une face cylindrique **48** (figure **4**) tournée vers l'intérieur et faisant face au rebord **26** de la bague intérieure, à faible distance de celui-ci, de manière à assurer un guidage de la cage **16** par rapport à la bague intérieure **14.**

Chaque cage **16** présente une face **58** tournée radialement vers l'extérieur, qui s'étend de l'anneau de petit diamètre **30** à l'anneau de grand diamètre **28.** Cette face radiale extérieure **58** est contenue dans une enveloppe géométrique **60** constituée par une surface de révolution en trois parties : une première partie d'extrémité **62** cylindrique s'étendant axialement à partir de l'anneau de grand diamètre **28** vers l'anneau de petit diamètre **30,** une deuxième partie intermédiaire tronconique **64** et une troisième partie d'extrémité **66** également tronconique reliant la deuxième partie **64** à l'anneau de petit diamètre **30.** L'angle solide du tronc de cône de la partie d'extrémité **66** est plus ouvert que l'angle solide du tronc de cône de la partie intermédiaire **64.** La partie intermédiaire **64** s'étend axialement de part et d'autre d'un plan transversal médian situé axialement à égale distance des faces transversales **34, 36** de la cage. La partie cylindrique **62** a un diamètre inférieur au plus petit diamètre Φmin de la bague extérieure, pour permettre l'insertion de la cage dans la bague extérieure.

De manière analogue, les ponts **32** de chaque cage présentent une face **68** tournée radialement vers l'intérieur, qui s'étend de l'anneau de petit diamètre **30** à l'anneau de grand diamètre **28.** Cette face radiale intérieure **68** est contenue dans une enveloppe géométrique **70** constituée par une surface de révolution en trois parties : une première partie **72** cylindrique d'extrémité s'étendant axialement à partir de l'anneau de grand diamètre **28** vers l'anneau de petit diamètre **30,** une deuxième partie intermédiaire tronconique **74** et une troisième partie **76** d'extrémité également tronconique reliant la deuxième partie **74** à l'anneau de petit diamètre **30.** L'angle solide du tronc de cône de la partie d'extrémité **76** est plus ouvert que l'angle solide du tronc de cône de la partie intermédiaire **74.** La partie intermédiaire **74** s'étend axialement de part et d'autre du plan transversal médian situé axialement à mi-distance des faces transversales **34, 36** de la cage.

Cette description similaire des faces intérieures 68 des ponts et de la face extérieure **58** de la cage traduit le fait que la dimension d'épaisseur de la cage, mesurée par exemple au niveau des fenêtres **40,** et plus généralement entre les surface intérieure **68** et extérieure **58,** est relativement constante (à **10**% et de préférence à **5**% près) sur toute la structure de la cage, comme le montre en particulier la section de la figure **4****.** Cette épaisseur relativement constante est particulièrement adaptée à une fabrication de la cage mettant en oeuvre une étape d'emboutissage d'une tôle pour obtenir la forme générale de la cage. On peut ainsi définir pour chaque pont un tronçon intermédiaire tronconique **84** correspondant aux surfaces intermédiaires tronconiques intérieure **74** et extérieure **64,** et, de part et d'autre de ce tronçon intermédiaire **84,** un tronçon cylindrique **82** reliant le tronçon intermédiaire à l'anneau de grand diamètre et un tronçon tronconique **86** reliant le tronçon intermédiaire **84** à l'anneau de petit diamètre, le tronçon d'extrémité cylindrique **82** correspondant à la surface cylindrique intérieure d'extrémité **72** et à une partie de la surface cylindrique extérieure **62,** le tronçon d'extrémité tronconique **86** correspondant quant à lui à la surface tronconique extérieure **66** et à la surface tronconique intérieure d'extrémité **76.** Le tronçon intermédiaire **84** de chaque pont est pourvu d'ergots **90** faisant saillie dans les alvéoles **40,** en l'occurrence deux paires d'ergots **90** faisant saillie chacune dans l'une des deux alvéoles délimitée par le pont considéré.

Chaque rouleau **18** est ainsi logé dans une alvéole **40** délimitée par les anneaux **28, 30** de grand et de petit diamètre et par deux des ponts **32** présentant chacun deux ergots **90** faisant saillie à l'intérieur de l'alvéole. On peut définir pour chaque alvéole un axe géométrique **92** caractéristique de l'alvéole **40** et destiné à être confondu avec l'axe de rotation **47** du rouleau **18** logé dans l'alvéole **40.** Chaque alvéole **40** présente des surfaces de guidage du rouleau, destinées à assurer l'alignement de l'axe de rotation **47** du rouleau **18** avec cet axe caractéristique **92** de l'alvéole **40.** Plus précisément, l'anneau de grand diamètre **28** forme au niveau de chaque alvéole une face de guidage d'extrémité **50** plane perpendiculaire à l'axe géométrique **92** caractéristique de l'alvéole. De même, l'anneau de petit diamètre **30** forme au niveau de chaque alvéole une facette de guidage d'extrémité plane **52** perpendiculaire à l'axe géométrique **92** caractéristique de l'alvéole. La distance entre les faces de guidage d'extrémité **50, 52** est légèrement supérieure à la distance entre les faces planes transversales d'extrémité **42, 44** des rouleaux **18,** de sorte qu'un jeu fonctionnel faible est préservé entre le rouleau **18** et les anneaux **28, 30.**

Chaque ergot présente une facette **94** de contact avec le rouleau **18** logé dans l'alvéole **40,** cette facette de contact **94** étant tournée vers l'axe de rotation **47** du rouleau **18** pour assurer un guidage radial périphérique du rouleau **18.** Plus précisément, les facettes de guidage périphérique **94** des quatre ergots **90** de l'alvéole **40** sont tangentes à une même surface de révolution autour de l'axe géométrique **92** caractéristique de l'alvéole, cette surface de révolution étant destinée à être confondue avec la surface de roulement **46** du rouleau **18** lorsque la cage **16** est positionnée sur la bague intérieure **14** et que le rouleau **18** roule sur le chemin de roulement **22** de la bague intérieure **14.**

Les facettes de guidage périphérique **94** sont positionnées radialement à l'extérieur de l'axe géométrique **92** caractéristique de l'alvéole, et retiennent le rouleau **18** dans l'alvéole **40** en appui sur le chemin de roulement **22** de la bague intérieure **14** même en l'absence de bague extérieure **12.**

Les axes géométriques **92** caractéristiques des alvéoles **40** constituent autant de génératrices d'un cône qui a vocation à être confondu avec le cône primitif décrit par les axes de rotation **47** des rouleaux **18** lorsque la bague intérieure **14** tourne autour de son axe de symétrie de révolution **Y.** Ce cône est situé radialement à l'intérieur de la partie intermédiaire tronconique **74** de l'enveloppe géométrique **70** de la face intérieure **68,** et présente avec cette partie intermédiaire **74** un même angle solide d'ouverture, de sorte que l'axe caractéristique **92** de chaque alvéole est parallèle à une génératrice de la partie intermédiaire tronconique **74** de l'enveloppe géométrique **70** de la face intérieure **68.**

Chaque facette de guidage périphérique **94** est délimitée par une arête intérieure **96** formée avec la partie intermédiaire **74** de l'enveloppe géométrique de la face intérieure du pont considéré, une arête extérieure **98** sensiblement parallèle à l'arête intérieure **96,** et deux arêtes latérales **100, 102** perpendiculaires aux précédentes. La distance entre arête inférieure **96** et supérieure **98** est supérieure à la moitié de la distance entre les deux arêtes latérales **100, 102,** ce qui garantit que le point de contact entre rouleau **18** et cage **16** sera toujours sur la facette **94,** malgré d'éventuelles oscillations du rouleau **18** dans l'alvéole **40.** Les facettes de guidage périphérique **94** d'un même pont **32** sont de préférence situées aux extrémités de la portion intermédiaire **84** du pont. A titre indicatif, la distance entre deux facettes de guidage périphérique **94,** mesurée entre arêtes latérales **100, 102,** doit être suffisante pour assurer un bon guidage du rouleau **18** et est de préférence supérieure au tiers de la distance L séparant les deux faces de guidage d'extrémité **50, 52** de l'alvéole considérée. Chaque facette de guidage périphérique **94** est distante de la face de guidage d'extrémité **50, 52** adjacente d'une distance inférieure au quart, et préférentiellement au cinquième, de la distance L séparant les deux facettes de guidage d'extrémité **50, 52.** Chaque arête intérieure **96** a une longueur comprise entre un dixième et un cinquième de la distance L séparant les deux faces de guidage d'extrémité **50, 52.**

Comme illustré sur les figures **1** et **2****,** les anneaux intérieurs **28** des deux cages **16** sont contigus et leurs faces transversales **34** sont quasiment au contact l'une de l'autre.

Pour assembler le roulement, on monte tout d'abord sur la bague intérieure **14** les deux cages **16** munies de leurs rouleaux **18,** deux alvéoles par cage restant toutefois vides, comme illustré sur la figure **1****.** Ce sous-ensemble **104** est présenté perpendiculairement à la bague extérieure **12,** et inséré dans ce sens dans la bague extérieure **12.** Lors de cette insertion, les ponts **32** correspondant aux alvéoles vides sont quasiment au contact de la bague extérieure **12,** mais la forme générale de la face radiale extérieure **60** de la cage, et notamment la partie intermédiaire tronconique **64,** permettent un passage sans contact. Une fois le sous-ensemble inséré dans la bague extérieure **12,** il est possible de faire pivoter la bague intérieure **14** de manière à présenter vers l'extérieur les alvéoles vides, et à y insérer les rouleaux manquants.

Naturellement, diverses variantes sont envisageables. Pour certaines applications, la bague intérieure **14** peut ne pas être symétrique par rapport à son plan médian transversal. De même, la bague extérieure **12** n'a pas nécessairement de plan transversal de symétrie. La bague intérieure n'est pas nécessairement monobloc. Les fenêtres constituant les alvéoles **40** peuvent être obtenues par toute méthode d'usinage appropriée. La tôle constituant les cages **16** peut subir des traitements de surface. La tôle utilisée peut être une tôle d'acier, une tôle d'aluminium ou une tôle de laiton. Les rouleaux **18** peuvent présenter des embrèvements et les anneaux d'extrémité **28, 30** des protubérances correspondantes, entrant dans ces embrèvements pour contribuer au guidage des rouleaux **18.**

## Revendications

1. Cage (16) pour au moins une rangée de rouleaux (18) d'un roulement sphérique (10), la cage (16) définissant un axe géométrique de révolution (Z) et comportant :
- deux anneaux d'extrémité (28, 30) centrés sur l'axe géométrique de révolution (Z), distants l'un de l'autre le long de l'axe géométrique de révolution (Z), et de diamètres différents ;
- des ponts (32) reliant les deux anneaux d'extrémité (28, 30) et délimitant deux à deux avec les anneaux d'extrémité (28, 30) des alvéoles (40) de logement des rouleaux (18), chacun des ponts (32) comportant
- deux tronçons d'extrémité (82, 86) reliés chacun à l'un des deux anneaux d'extrémité (28, 30) et
- un tronçon intermédiaire (84) reliant les deux tronçons d'extrémité (82, 86) et présentant une face intérieure (74) tournée vers l'axe de révolution (Z), les tronçons intermédiaires (84) des ponts (82) définissant ensemble une surface géométrique tronconique intermédiaire unique incluant toutes les faces intérieures (74) des tronçons intermédiaires (84),
**caractérisé en ce qu'**en considérant chacune des alvéoles (40) et chacun des ponts (32) délimitant l'alvéole (40) considérée, le tronçon intermédiaire (84) du pont (32) considéré comporte au moins deux ergots (90) faisant saillie vers l'alvéole (40) considérée, chacun des ergots (90) présentant une facette de guidage périphérique (94) tournée vers l'alvéole (40) considérée et formant une arête intérieure (96) avec la face intérieure (74) du tronçon intermédiaire (84) du pont (32) considéré, les facettes de guidage périphérique (94) des ergots (90) faisant saillie dans l'alvéole (40) considérée étant tangentes à une même surface de révolution autour d'un axe géométrique caractéristique (92) de l'alvéole (40) considérée qui fait avec l'axe de révolution (Z) de la cage un angle égal à la moitié de l'angle solide de la surface géométrique tronconique intermédiaire, que les tronçons d'extrémité (86) de chacun des ponts (32) reliés à celui (30) des deux anneaux de plus petit diamètre présentent chacun une face intérieure (76) tournée vers l'axe de révolution (Z) et tangente à une même surface tronconique d'extrémité décrite autour de l'axe de révolution (Z) et que la surface tronconique d'extrémité présente un angle solide supérieur à l'angle solide de la surface tronconique intermédiaire.

2. Cage selon la revendication 1, **caractérisée en ce que** les axes caractéristiques (92) des alvéoles sont situés sur une même enveloppe géométrique tronconique primitive située radialement à l'intérieur de la surface géométrique tronconique intermédiaire ou confondue avec la surface géométrique tronconique intermédiaire.

3. Cage selon la revendication 1 ou la revendication 2, **caractérisée en ce que** la surface de révolution a une génératrice en arc de cercle.

4. Cage selon l'une quelconque des revendications précédentes, **caractérisée en ce que** chaque facette de guidage (94) présente une arête extérieure (98) parallèle à l'arête intérieure (96), et située à une distance de l'arête intérieure (96) supérieure à la moitié de la longueur de l'arête intérieure (96).

5. Cage selon l'une quelconque des revendications précédentes, **caractérisée en ce que** chacune des alvéoles présente deux faces de guidage d'extrémité (50, 52) constituées par les deux anneaux d'extrémité (28, 30), les deux faces de guidage d'extrémité (50, 52) étant planes, perpendiculaires à l'axe caractéristique (92) de l'alvéole (40) et distantes l'une de l'autre d'une distance L.

6. Cage selon la revendication 5, **caractérisée en ce que** en considérant chacune des alvéoles (40) et chacun des ponts (32) délimitant l'alvéole (40) considérée, les facettes de guidage périphérique (94) situées sur le pont (32) considéré sont distantes l'une de l'autre d'une distance supérieure au tiers de la distance L séparant les deux faces de guidage d'extrémité (50, 52) de l'alvéole (40) considérée.

7. Cage selon l'une quelconque des revendications 5 ou 6, **caractérisée en ce que** en considérant chacune des alvéoles (40) et chacun des ponts (32) délimitant l'alvéole (40) considérée, chaque facette de guidage périphérique (94) du pont (32) considéré est distante de l'une des deux faces de guidage d'extrémité (50, 52) d'une distance inférieure au quart, et préférentiellement au cinquième, de la distance L séparant les deux faces de guidage d'extrémité (50, 52).

8. Cage selon l'une quelconque des revendications 5 à 7, **caractérisée en ce que** chaque arête intérieure (96) a une longueur comprise entre un dixième et un cinquième de la distance L séparant les deux faces de guidage d'extrémité (50, 52).

9. Cage selon l'une quelconque des revendications précédentes, **caractérisée en ce que** les tronçons d'extrémité (82) de chacun des ponts reliés à celui (28) des deux anneaux de plus grand diamètre présentent chacun une face intérieure (72) tournée vers l'axe de révolution (Z) et tangente à une même surface cylindrique d'extrémité décrite autour de l'axe de révolution (Z).

10. Cage selon l'une quelconque des revendications précédentes, **caractérisée en ce que** la cage (16) est monobloc en tôle, préférentiellement en tôle emboutie.

11. Roulement sphérique (10) comportant :
- une bague extérieure monobloc (12) sur laquelle est formé un chemin de roulement sphérique (20) ;
- une bague intérieure (14) sur laquelle sont formés deux chemins de roulement (22) ;
- deux cages (16) selon l'une quelconque des revendications précédentes, chacune correspondant à l'un des deux chemins de roulements de la bague intérieure (14) ; et
- des rouleaux (18) disposés dans les alvéoles (40) des deux cages, entre la bague intérieure (14) et la bague extérieure (16) et de manière à former deux rangées de rouleaux (18), chacune roulant sur l'un des deux chemins de roulement (20, 22).

12. Roulement sphérique selon la revendication 11, **caractérisé en ce que** pour chacune des deux cages, les arêtes intérieures (96) sont situées radialement à l'extérieur d'un tronc de cône décrit par les axes de rotation (47) des rouleaux (18) lorsque les rouleaux (18) roulent sur le chemin de roulement (22) correspondant de la bague intérieure (14).

13. Roulement sphérique selon l'une quelconque des revendications 11 à 12,
**caractérisé en outre en ce que** l'anneau (30) de plus petit diamètre de chaque cage (16) comporte une face cylindrique (48) tournée radialement vers l'intérieur en regard d'une surface correspondante (26) de la bague intérieure (14) tournée radialement vers l'extérieur.

## Patentansprüche

1. Käfig (16) für mindestens eine Reihe Rollen (18) eines sphärischen Rollenlagers (10), wobei der Käfig (16) eine geometrische Drehachse (Z) definiert und folgendes umfasst:
- zwei Endringe (28, 30), die auf der geometrischen Drehachse (Z) zentriert sind, entlang der geometrischen Drehachse (Z) voneinander beabstandet sind und unterschiedliche Durchmesser haben;
- Stege (32), welche die beiden Endringe (28, 30) miteinander verbinden und paarweise mit den Endringen (28, 30) Aufnahmezellen (40) für die Rollen (18) abgrenzen, wobei jeder Steg (32) folgendes umfasst:
- zwei Endabschnitte (82, 86), die jeweils mit einem der beiden Endringe (28, 39) verbunden sind, und
- einen Zwischenabschnitt (84), der die beiden Endabschnitte (82, 86) miteinander verbindet und eine zur Drehachse (Z) gewandte Innenseite (74) aufweist, wobei die Zwischenabschnitte (84) der Stege (82) gemeinsam eine kegelstumpfförmige geometrische einheitliche Fläche bilden, zu der alle Innenseiten (74) der Zwischenabschnitte (84) gehören,
**dadurch gekennzeichnet, dass** im Hinblick auf jede der Zellen (40) und jeden der Stege (32), welche die betreffende Zelle (40) abgrenzen, der Zwischenabschnitt (84) des jeweiligen Stegs (32) mindestens zwei in die Zelle vorstehende Stifte (90) umfasst, wobei jeder der Stifte (90) einen umlaufenden, zur Zelle (40) gewandten Führungsbereich (94) aufweist, und mit der Innenseite (74) des Zwischenabschnitts (84) des jeweiligen Stegs (32) eine Innenkante (96) bildet, wobei die umlaufenden Führungsbereiche (94) der in die Zelle (40) vorspringenden Stifte (90) ein und dieselbe rotationssymmetrische Fläche auf einer charakteristischen geometrischen Achse (92) der Zelle (40) tangieren, welche mit der Drehachse (Z) des Käfigs einen Winkel gleich der Hälfte des Raumwinkels der geometrischen kegelstumpfförmigen Zwischenfläche bildet, dass die Endabschnitte (86) jedes Stegs (32), die mit dem Ring (30) mit dem kleineren Durchmesser verbunden sind, jeweils eine zur Drehachse (Z) gewandte Innenfläche (76) aufweisen, die ein und dieselbe, um die Drehachse (Z) beschriebene kegelstumpfförmige Endfläche tangiert, und dass die kegelstumpfförmige Endfläche einen Raumwinkel aufweist, der größer ist als der Raumwinkel der kegelstumpfförmigen Zwischenfläche.

2. Käfig nach Anspruch 1, **dadurch gekennzeichnet, dass** die charakteristischen Achsen (92) der Zellen an ein und demselben geometrischen Kegelstumpfmantel des Teilkreises liegen, der sich radial im Innern der kegelstumpfförmigen geometrischen Zwischenfläche befindet oder mit der kegelstumpfförmigen geometrischen Zwischenfläche zusammenfallen.

3. Käfig nach Anspruch 1 oder Anspruch 2, **dadurch gekennzeichnet, dass** die rotationssymmetrische Fläche eine kreisbogenförmige Mantellinie hat.

4. Käfig nach einem der vorhergehenden Ansprüche, **dadurch gekennzeichnet, dass** jeder Führungsbereich (94) eine Außenkante (98) aufweist, die parallel zur Innenkante (96) verläuft und von der Innenkante (96) mehr als die Hälfte der Innenkantenlänge (96) entfernt ist.

5. Käfig nach einem der vorhergehenden Ansprüche, **dadurch gekennzeichnet**, das jede der Zellen zwei aus den zwei Endringen (28, 30) entstehende Endführungsflächen (50, 52) aufweist, wobei die beiden Endführungsflächen (50, 52) eben sind, senkrecht zur charakteristischen Achse (92) der Zelle (40) verlaufen und in einem Abstand L voneinander entfernt sind.

6. Käfig nach Anspruch 5, **dadurch gekennzeichnet, dass** an jeder Zelle (40) und jedem Steg (32), der die betreffende Zelle (40) abgrenzt, die umlaufenden Führungsseiten (94) am Steg (32) in einem Abstand zueinander stehen, der größer als ein Drittel des Abstands L zwischen den beiden Endführungsflächen (50, 52) der Zelle (40) ist.

7. Käfig nach einem der Ansprüche 5 oder 6, **dadurch gekennzeichnet, dass** für jede der Zellen (40) und jeden der die jeweilige Zelle (40) begrenzenden Stege (32) jeder umlaufende Führungsbereich (94) des jeweiligen Stegs (32) von einer der beiden Endführungsflächen (50, 52) weniger als ein Viertel und vorzugweise ein Fünftel des Abstands L zwischen den beiden Endführungsflächen (50, 52) entfernt ist.

8. Käfig nach einem der Ansprüche 5 bis 7, **dadurch gekennzeichnet, dass** jede Innenkante (96) eine Länge aufweist, die zwischen einem Zehntel und einem Fünftel des Abstands L zwischen den beiden peripheren Endseiten (50, 52) beträgt.

9. Käfig nach einem der vorhergehenden Ansprüche, **dadurch gekennzeichnet, dass** die Endabschnitte (82) jedes Stegs, die mit dem Ring (28) mit dem größeren Durchmesser verbunden sind, eine Innenfläche (72) aufweisen, die zur Drehachse (Z) gewandt ist und eine Tangente zu ein und derselben, um die Drehachse (Z) beschriebenen zylinderförmigen Endfläche bildet.

10. Käfig nach einem der vorhergehenden Ansprüche, **dadurch gekennzeichnet, dass** der Käfig (16) aus einem einzigen Blechstück, vorzugsweise aus Pressblech, gearbeitet ist.

11. Rollenlager (10), das folgendes umfasst:
- einen Außenring aus einem Stück (12), auf den eine Rollenlagerlaufbahn (20) geformt ist;
- einen Innenring (14), auf dem zwei Rollenlagerlaufbahnen (22) geformt sind;
- zwei Käfige (16) nach einem der vorhergehenden Ansprüche, von denen jeder für eine der beiden Laufbahnen des Innenrings (14) bestimmt ist; und
- Rollen (18), die in den Zellen (40) der beiden Käfige zwischen dem Innenring (14) und dem Außenring (16) so angeordnet sind, dass sie zwei Rollenreihen (18) bilden, von denen jede auf einem der beiden Laufbahnen (20, 22) entlang läuft.

12. Rollenlager nach Anspruch 11, **dadurch gekennzeichnet, dass** sich bei jedem der beiden Käfige die Innenkanten (96) radial an der Außenseite eines Kegelstumpfs befinden, der von den Drehachsen (47) der Rollen (18) beschrieben wird, wenn die Rollen (18) auf der Laufbahn (22) des Innenrings (14) laufen.

13. Rollenlager nach einem der Ansprüche 11 bis 12, **dadurch gekennzeichnet, dass** der Ring (30) des Käfigs (16) mit dem kleineren Durchmesser eine zylindrische Seite (48) aufweist, die radial nach innen gewandt ist und sich gegenüber der entsprechenden Fläche (26) des Innenrings (14) befindet, die radial nach außen gewandt ist.

## Claims

1. A cage (16) for at least one row of rollers (18) of a spherical bearing (10), with the cage (16) defining a geometrical axis of revolution (Z) and having:
- two end rings (28, 30) centered on the geometrical axis of revolution (Z), spaced from one another along the geometrical axis of revolution (Z) and having different diameters;
- bridges (32) connecting the two end rings (28, 30) and delimiting, in pairs with the end rings (28, 30), rollers (18) accommodating cells (40), with each bridge (32) comprising
- two end sections (82, 86), each connected to one of the two end rings (28, 30) and
- an intermediate section (84) connecting the two end sections (82, 86) and having an inner face (74) facing the axis of revolution (Z), with the intermediate sections (84) of the bridges (82) defining together a single truncated-shaped intermediate geometrical surface including all the inner faces (74) of the intermediate sections (84),
**characterized in that**, when considering each of the cells (40) and each of the bridges (32) delimiting the considered cell (40), the intermediate section (84) of the considered bridge (32) comprises at least two pins (90) protruding towards the considered cell (40), with each of the pins (90) having a peripheral guiding face (94) oriented towards the considered cell (40) and forming an inner edge (96) with the inner face (74) of the intermediate section (84) of the considered bridge (32), with the peripheral guiding faces (94) of the pins (90) protruding in the considered cell (40) being tangent to the same surface of revolution about a geometrical axis characteristic (92) of the considered cell (40) which is, with the axis of revolution (Z) of the cage, at an angle equal to half the solid angle of the intermediate truncated-shaped geometrical surface, **in that** the end sections (86) of each of the bridges (32) connected to the one (30) of both rings having the smaller diameter each have an inner face (76) oriented towards the axis of revolution (Z) and tangent to the same end truncated-shaped surface described about the axis of revolution (Z) and **in that** the end truncated-shaped surface has a solid angle greater than the solid angle of the intermediate truncated-shaped surface.

2. A cage according to claim 1, **characterized in that** the characteristic axes (92) of the cells are located on the same geometrical truncated-shaped pitch envelope located radially inside the intermediate truncated-shaped geometrical surface, or merged with the intermediate truncated-shaped geometrical surface.

3. A cage according to claim 1 or claim 2, **characterized in that** the surface of revolution has a semi-circular generatrix.

4. A cage according to any one of the preceding claims, **characterized in that** each guiding face (94) has an outer edge (98) parallel to the inner edge (96), and located at a distance from the inner edge (96) greater than half the length of the inner edge (96).

5. A cage according to any one of the preceding claims, **characterized in that** each of the cells has two end guiding faces (50, 52) formed by the two end rings (28, 30), with the two end guiding faces (50, 52) being planar, perpendicular to the characteristic axis (92) of the cell (40) and spaced from each other by a distance L.

6. A cage according to claim 5, **characterized in that**, considering each of the cells (40) and each of the bridges (32) delimiting the considered cell (40), the peripheral guiding faces (94) located on the considered bridge (32) are spaced from each other by a distance greater than one third of the distance L between the two end guiding faces (50, 52) of the considered cell (40).

7. A cage according to any one of claims 5 or 6, **characterized in that**, considering each of the cells (40) and each of the bridges (32) delimiting the considered cell (40), each peripheral guiding face (94) of the considered bridge (32) is spaced from one of the two end guiding faces (50, 52) by a distance of less than one quarter, and preferably one fifth, of the distance L between the two end guiding faces (50, 52).

8. A cage according to any one of claims 5 to 7, **characterized in that** each inner edge (96) has a length ranging from one tenth to one fifth of the distance L between the two end guiding faces (50, 52).

9. A cage according to any one of the preceding claims, **characterized in that** the end sections (86) of each bridge (32) connected to the one (30) among the two rings having the larger diameter each have an inner face (76) facing the axis of revolution (Z) and tangent to a common end cylindrical surface described about the axis of revolution (Z).

10. A cage according to any one of the preceding claims, **characterized in that** the cage (16) is made in one piece of steel sheet, preferably seamless steel sheet.

11. A spherical bearing (10) comprising:
- a one-piece outer ring (12) whereon a spherical raceway (20) is formed;
- an inner ring (14) whereon two raceways (22) are formed;
- two cages (16) according to any one of the preceding claims, each corresponding to one of the two raceways of the inner ring (14); and
- rollers (18) positioned in the cells (40) of the two cages, between the inner ring (14) and the outer ring (16) and so as to form two rows of rollers (18), each rolling on one of the two raceways (20, 22).

12. A spherical bearing according to claim 11, **characterized in that**, for each one of the two cages, the inner edges (96) are located radially outside a cone frustrum described by the axes of rotation (47) of the rollers (18) when the rollers (18) roll on the matching raceway (22) of the inner ring (14).

13. A spherical bearing according to any one of claims 11 to 12, further **characterized in that** the ring (30) having the smaller diameter of each cage (16) comprises a cylindrical face (48) facing radially inwards opposite a matching surface (26) of the inner ring (14) facing radially outwards.
